Europäisches Patentamt

**European Patent Office**

Office européen des brevets

(19)

(11) Publication number: **0 129 346**
**B1**

(12) # EUROPEAN PATENT SPECIFICATION

(45) Date of publication of patent specification: **22.07.87**

(21) Application number: **84303447.1**

(22) Date of filing: **22.05.84**

(51) Int. Cl.⁴: **A 23 J 3/00,** A 23 L 1/24,
A 23 L 1/30

(54) **Whey protein food product base.**

(30) Priority: **25.05.83 US 497845**

(43) Date of publication of application:
**27.12.84 Bulletin 84/52**

(45) Publication of the grant of the patent:
**22.07.87 Bulletin 87/30**

(84) Designated Contracting States:
**AT BE CH DE FR GB IT LI LU NL SE**

(56) References cited:
**EP-A-0 029 370**
**GB-A-2 063 273**
**US-A-3 870 811**

(73) Proprietor: **LAND O'LAKES INC.**
**4001 Lexington Avenue North**
**Arden Hills MN 55112 (US)**

(72) Inventor: **Graves, Frederic A.**
**15949 Alamo Street**
**Ham Lake Minnesota 55303 (US)**
Inventor: **Niemand, Carolyn M.**
**10813 Madison Street N.E.**
**Blaine, Minnesota 55434 (US)**

(74) Representative: **Parr, Ronald Edward R.E. Parr &**
**Co.**
**Colman House Station Road**
**Knowle Solihull West Midlands B93 0HL (GB)**

Courier Press, Leamington Spa, England.

**Description**

Background of the invention
1. Field of the invention .
The present invention relates to a food product base and the process for preparing such a food product base by using a whey protein concentrate having a large functional protein fraction and substituting the whey protein concentrate for a portion of the fat.

2. Description of the prior art
The trend in eating habits has been growing to food products having a lower fat content. These lowfat food products, commonly referred to as low calorie food products, include such items as salad dressing, cheese spreads and various dairy products.

Generally, low fat food products have been designed to imitate their high fat parent. For example, low calorie salad dressings are made to imitate their high fat counterparts. However, attempts in imitating the high fat counterpart food product have fallen short in terms of taste and mouth feel.

At least one attempt has been made to provide a food composition to provide a desired texture or mouth feel and viscosity. U.S. Patent 4,143,174 to Shaw et al describes a food composition wherein a denatured non-proteinaceous complex precipitate of whey is used to essentially increase the viscosity of various food products such as imitation orange juice, pre-cooked cereal, tomato juice, mayonnaise, artificial cheese sauce and salad dressings. However, the food composition as described in the Shaw et al Patent does not exhibit the type of mouth feel as do the fat components that have been removed or eliminated from food products such as salad dressings, cheese spreads and various other dairy products.

GB—A—2 063 273 relates to a method of preparing modified whey proteins, in which the whey protein used has previously been heated to a temperature above that which causes its denaturisation.

Summary of the invention
The present invention comprises a food product base and a process for preparing the same. The process comprises: mixing a whey protein concentrate having a whey protein fraction obtained by a separation process using a temperature less than the temperature that causes denaturisation of whey protein, the whey protein fraction being in a range of 3.0 to 7.5% by weight of the food product base with a composition comprising water or water-based compositions to form a mixture; and heating the mixture until a gel forms having a non-grainy texture.

Preferably, the whey protein concentrate has a functional protein content of approximately 30% and is dry blended with the vegetable oil and then mixed with a milk-derived compound to obtain the final functional whey protein fraction in the food product base. The hydration with the water of the protein results in a food product base that, when mixed with other flavourings and condiments, provides a low fat final food product having a mouth feel such as a high fat food product.

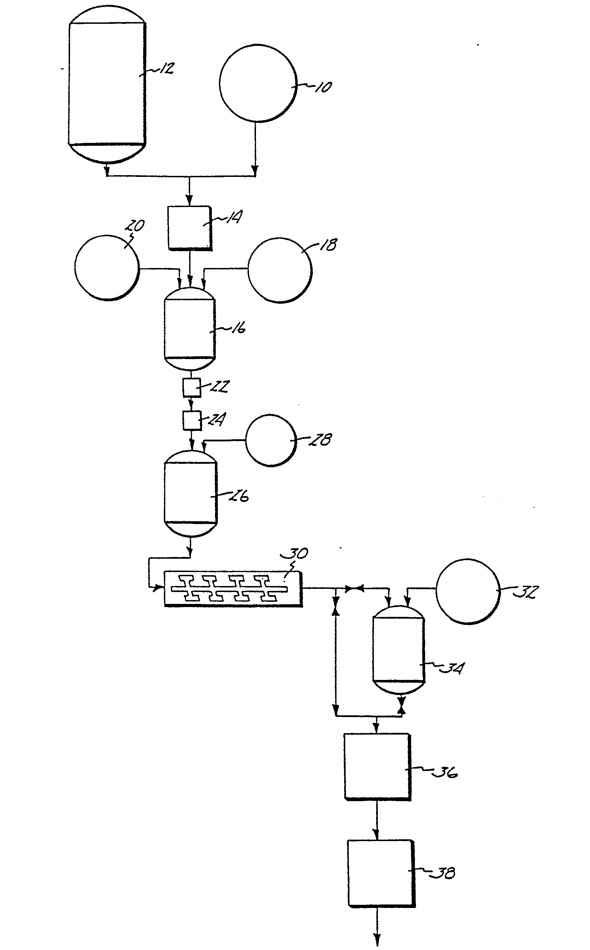

Brief description of the drawing
The Figure is a flow diagram of the process of the present invention.

Detailed description of the preferred embodiments
The process of the present invention is a process that produces a food product base characterized by a creamy smooth mouth feel as is found in high fat content food product such as a high fat salad dressing. The process includes mixing a whey protein concentrate (WPC) with water or a water-based dispersant in an amount such that the functional whey protein fraction in the food product base is in the range of approximately 3.0 to 7.5%. The functional protein content is determined by Kjeldahl nitrogen×6.38 and corrected for non-protein nitrogen.

The WPC used in the present invention is a commercially-available protein concentrate made in a manner that minimizes denaturing of the whey protein fraction. That is, the whey protein fraction is subjected to minimal high temperature treatment (below 140°F) during concentration of the whey which may include the steps of ultrafiltration, evaporation and spray drying.

For purposes of the present specification, the term "whey protein" means that protein that is part of the whey which is obtained by the separation and removal of coagulated casein during the cheese making process. Sweet cheese whey is preferred in the present invention. Specific examples of cheese whey produced by an enzymatic reaction include whey from processes that make American and Cheddar cheese. Functional whey protein, as used within the present invention, refers to the capability of the protein to form a gel with water in what is believed to be a complex. The particular reaction is not fully understood nor is needed to be understood to practice the present invention.

A desirable functional whey protein concentrate has a functional whey protein fraction that is approximately 30% by weight of the WPC, with the remaining portion of the WPC being lactose, various minerals, salts and nutrients. However, the particular concentration of functional whey protein fraction of the WPC is not particularly important to the present invention. WPCs having other functional whey protein fractions are also used but in amounts to achieve an approximate range of 3.0 to 7.5% of whey protein in the food product base.

Typically, products such as salad dressings have a pH of below 4.6 to meet packaging requirements set by governmental agencies. Whey proteins are preferred in the process of the present invention since, unlike casein proteins or soybean proteins, whey proteins do not precipitate out of solution under the conditions of the process to be discussed subsequently. Instead, as will be explained subsequently, the whey proteins stay in solution and react with water to impart the desired characteristics in the final food product base when prepared by the process of the present invention.

Referring to the flow diagram of the Figure, a WPC having approximately a 30% whey protein fraction by weight in vessel 10 is mixed with a vegetable oil in preferably a ribbon blender 12. The vegetable oil can be any of the various vegetable oils such as corn oil or cottonseed oil with corn oil being preferred. The WPC and the corn oil are blended in preferably a 4/1 ratio.

The WPC/oil mixture is conveyed into a conventional high speed blender 16 and mixed with water or a water-based compound such as a dairy product in vessel 18.

The dairy product can be cultured buttermilk, sour cream or the like. The type of water-based compound used depends on the flavor desired in the final food product. For example, if the food product base is being used as a salad dressing base, such as for creamy Italian or French salad dressing, sour cream is added to the food product base. If no sour cream flavor is desired in the final product, water alone or another type of water-based compound is used in the process to produce the food product base.

In addition, a food grade acid from vessel 20, such as vinegar or citric acid, is added to the mixture in blender 16 for flavoring and to lower the pH to meet governmental packaging specifications. The acid, however, can be added at a later step in the process as will be discussed subsequently.

The mixture is then processed through a colloid mill 22 eliminating any lumps in the product that may have formed in the mixing tank 16. After the colloid mill 22, the mixture is processed through a homogenizer 24 to form a finely dispersed emulsion. Processing the mixture through the homogenizer 24 breaks up the fat globules, reducing their size and increasing their number. The increase in number of fat globules results in greater light reflection and a more opaque final product which is desirable in a salad dressing.

The mixture is then preferably transported into a hold tank 26 for further processing. At this point, other ingredients and flavors, such as spices, are added as desired to the food product base from vessel 28.

The mixture is transported from the hold tank 26 to vessel 30 and heated to a temperature range of approximately 170°F to 212°F with a preferred temperature of approximately 180°F to denature the whey protein. Although the whey protein and the water have been in contact for a considerable period of time, since blender 16, only an insignificant portion of the protein has been denatured. The protein has been processed at low temperatures (below 150°F) through the steps described previously to maintain the functionality of the whey protein until the present process step.

Preferably, the product is heated to approximately 180°F in a swept-surface heat exchanger 30. However, any other type of vessel that produces the desired results is within the scope of the invention.

The heating of the mixture is believed to do at least two things. First, the heating denatures the whey protein, allowing the protein to expand as fully as possible. The expansion of the protein results in an increase in viscosity of the mixture and the high fat mouth feel. Second, if the acid has been added prior to the swept-surface heat exchanger 30 lowering the pH below 4.6, the product is also sterilized at the relatively low temperature of 180°F.

The swept-surface heat exchanger provides a preferable manner of denaturing the whey protein. It has been found that the functional whey protein gels properly as a function of time and temperature. In a swept-surface heat exchanger, the protein contacts the heated surface and is then swept away by the paddles. It is believed that this contact time at 180°F is less than one second. A longer time at 180°F will result in the protein coagulating, resulting in the product having a grainy texture.

If acid has not been added to the food product base before the swept-surface heat exchanger, acid is then added after the swept-surface heat exchanger for packaging purposes. Adding the acid after the swept-surface heat exchanger produces a food product having a slightly different texture and appearance by increasing the viscosity approximately 100% and producing a slight visual graininess to the product. It is believed that casein proteins in the sour cream and cream form a gel by addition of the acid after the heat exchanger, increasing the viscosity. The mouth feel of the product, however, still remains similar to a high fat food product.

Further ingredients from vessels 32 can be added to the food product base in mixing tanks 34. If the food product base is used as a salad dressing base, the additives include condiments such as blue cheese or the like, depending on the particular salad dressing desired. Such condiments are preferably added after the high speed blender, homogenizer and swept-surface heat exchanger to avoid over processing of the condiments.

If no condiments are to be added to the food product base, the mixing tank 34 is simply by-passed by suitable valving.

The final product is then packaged preferably while hot, for example, in a filler and capping system 36 and then cooled within the package in a cooling system 38. The gel sets (stabilizes) in the package.

The product must be conveyed after the heat exchanger 30 with a minimum of shear so that the gel formed by the protein is not "broken". If the gel is "broken", a thin product with tendency toward separation will result.

**0 129 346**

The food product base of the present invention is a low fat food product base having a high fat texture and mouth feel. It has been found that the viscosity of the food product base provides a reasonable quantitative measure for ensuring that the food product base will implant the desired mouth feel. Although viscosity does not measure texture or mouth feel, it has been found that if the food product base has a viscosity outside the range of 88,000 centipoise to 2,800,000 centipoise, it will not have the mouth feel required for resembling a full fat food product. An amount of functional whey protein less than approximately 3.0 percent by weight of the base produces a thin watery food product and an amount of functional whey protein above approximately 7.5% by weight of the base produces a very viscous pasty grainy product which does not impart the desired high fat characteristic. An amount of functional whey protein in the approximate range of 3.0 to 4.5 is preferred in the examples discussed subsequently.

The following examples are presented to illustrate food products that the present invention has been used for. The examples are not intended to limit the scope of the present invention.

Example I

A Cheese and Bacon flavored salad dressing having the following composition was prepared:

| Ingredients | Percent by weight |
|---|---|
| Water | 34.00 |
| Sour cream | 25.35 |
| WPC*/Corn oil** | 14.00 |
| Cream (30% butterfat) | 8.70 |
| Sugar | 6.00 |
| Seasoning blend | 1.90 |
| Vinegar (200 grain) | 2.80 |
| Cheese | 2.50 |
| Bacon bits | 2.00 |
| Salt | 1.50 |
| Starch | 1.20 |
| Guar/locus bean gum | 0.05 |
| Total: | 100.00 |

\* WPC having approximately 30% functional whey protein fraction.
\*\* Functional whey protein fraction in base=4.09%.

The salad dressing was prepared by first forming the food product base. Whey protein concentrate was mixed with corn oil in a ribbon blender in approximately a 4/1 ratio. The sour cream, cream and water were added to the WPC/oil mixture in the high speed blender to form a food product base having the following composition:

| Ingredients | Percent by weight |
|---|---|
| WPC*/Corn oil** | 16.5 |
| Sour cream | 30.3 |
| Cream (30% butterfat) | 10.0 |
| Water | 43.2 |
| Total: | 100.0 |

\* WPC having approximately 30% functional whey protein fraction.
\*\* Functional whey protein fraction=3.96%.

In addition to the sour cream, cream and water, vinegar was also added to the WPC/oil mixture in the high speed blender. The vinegar is not considered as part of the food product base since the food product base can be made without the addition of vinegar and the vinegar is added for taste and packaging purposes.

After the high speed blender, the mixture was processed through a colloid mill to remove any lumps that have been formed in the previous mixing steps and was then processed through a single-stage homogenizer to increase the opaque qualities of the finished product. Seasoning, sugar, salt, starch and guar/locust bean gum were then added. The emulsion was processed through a Cherry-Burrell

4

swept-surface heat exchanger at approximately 180°F to achieve a viscosity of approximately 150,000 centipoise.

Bacon bits and cheese were added to the viscous mixture to form the final product. The Cheese and Bacon salad dressing was creamy, having a mouth feel like a high fat Cheese and Bacon salad dressing.

Although a specific composition of a Cheese and Bacon salad dressing is described in Example I, it is believed that the following ingredient ranges in weight percent will produce a very satisfactory salad dressing using the process of the present invention.

Water: 31.0—45.0
Sour cream: 10.0—30.0
WPC/Corn oil (whey protein fraction=30%): 12.0—19.0
Cream (30% butterfat): 0.0—10.0
Sugar: 3.0—9.0
Cheese: 1.0—10.0
Seasoning blend: 1.5—7.0
Vinegar (200 grain): 1.0—5.0
Bacon bits: 0.5—4.0
Salt: 0.5—3.0
Starch: 0.0—3.0
Guar/locus bean gum: 0.0—0.3.

Example II
A French salad dressing was prepared having the following formula:

| Ingredients | Percent by weight |
|---|---|
| Water | 30.70 |
| Sour cream | 22.80 |
| Ketchup | 17.00 |
| WPC*/Corn oil** | 11.10 |
| Cream (30% butterfat) | 7.57 |
| Sugar | 5.00 |
| Seasoning blend | 1.83 |
| Vinegar (200 grain) | 2.67 |
| Starch | 1.00 |
| Oleoresin Paprika | 0.09 |
| Guar/locus bean gum | 0.05 |
| Onion powder | 0.19 |
| Total: | 100.00 |

\* WPC having approximately 30% functional whey protein fraction.
\*\* Functional whey protein fraction in base=3.69%.

The food product base for the French salad dressing was prepared substantially as described in Example I. Ketchup, sugar, seasoning blend, starch, oleoresin paprika and guar/locus bean gum was added to the food product base to achieve a French salad dressing taste. The results were a French salad dressing having a mouth feel similar to a high fat French salad dressing.

Although a specific composition of a French salad dressing is described in Example II, it is believed that the following ingredient ranges in weight percent will produce a very satisfactory salad dressing using the process of the present invention.

Water: 25.0—40.0
Sour cream: 10.0—30.0
Ketchup: 0.0—20.0
WPC/Corn oil (whey protein fraction=30%): 9.0—15.0
Cream (30% butterfat): 0.0—10.0
Sugar: 1.0—10.0
Seasoning blend: 0.5—4.0
Vinegar (200 grain): 1.0—5.0
Starch: 0.0—3.0
Oleoresin Paprika: 0.0—0.3
Guar/locust bean gum: 0.0—0.3
Onion powder: 0.0—1.0.

Example III

A Creamy Italian salad dressing was prepared with the following composition:

| Ingredients | Percent by weight |
|---|---|
| Water | 42.34 |
| Sour cream | 28.00 |
| WPC*/Corn oil** | 13.70 |
| Cream (30% butterfat) | 9.40 |
| Seasoning blend | 3.15 |
| Starch | 1.60 |
| Salt | 1.40 |
| Onion oil | 0.01 |
| Garlic oil | 0.04 |
| Lactic acid (88% by weight) | 0.26 |
| Citric acid | 0.06 |
| Guar/locus bean gum | 0.04 |
| Total: | 100.00 |

* WPC having approximately 30% functional whey protein fraction.
** Functional whey protein fraction in base=3.52%.

The food product base of the Creamy Italian salad dressing was prepared substantially the same as the food product base in Example I except that lactic and citric acid were added to the mixture in the high speed blender instead of vinegar. Seasoning blend, starch, salt, onion oil, garlic oil and guar/locust bean gum were subsequently added to the food product base. The Creamy Italian salad dressing had a mouth feel and taste of a full fat Creamy Italian salad dressing.

Although a specific composition of a Creamy Italian salad dressing is described in Example III, it is believed that the following ingredient ranges in weight percent will produce a very satisfactory salad dressing using the process of the present invention.

Water: 40.0—56.0
Sour cream: 10.0—30.0
WPC/Corn oil (whey protein fraction=30%): 13.0—18.0
Cream (30% butterfat): 0.0—10.0
Seasoning blend: 1.0—6.0
Starch: 0.0—3.0
Salt: 0.5—3.0
Onion oil: 0.001—0.05
Garlic oil: 0.001—0.1
Lactic acid (88% by weight): 0.1—2.0
Citric acid: 0.01—1.0
Guar/locus bean gum: 0.0—0.3.

Example IV

A Ranch salad dressing was prepared having the following composition:

| Ingredients | Percent by weight |
|---|---|
| Water | 42.43 |
| Sour cream | 28.20 |
| WPC*/Corn oil** | 13.80 |
| Cream (30% butterfat) | 9.45 |
| Seasoning blend | 3.48 |
| Starch | 1.60 |
| Lactic acid (88% by weight) | 0.76 |
| Garlic oil | 0.24 |
| Guar/locust bean gum | 0.04 |
| Total: | 100.00 |

* WPC having approximately 30% functional whey protein fraction.
** Functional whey protein fraction in base=3.53%.

# 0 129 346

The food product base for the Ranch salad dressing was prepared substantially as described in Example I except that lactic acid was added in the high speed blender instead of vinegar. A seasoning blend, starch, garlic and gum were added subsequently. The result was a Ranch-Style dressing having a taste and mouth feel of a high fat content Ranch salad dressing.

Although a specific composition of a Ranch salad dressing is described in Example IV, it is believed that the following ingredient ranges in weight percent will produce a very satisfactory salad dressing using the process of the present invention.

Water: 40.0—56.0
Sour cream: 10.0—30.0
WPC/Corn oil (whey protein fraction=30%): 13.0—18.0
Cream (30% butterfat): 0.0—10.0
Seasoning blend: 0.5—6.0
Starch: 0.0—3.0
Lactic acid (88% by weight): 0.5—4.0
Garlic oil: 0.05—1.0
Guar/locus bean gum: 0.0—0.3.

Example V

A Blue Cheese salad dressing was prepared having the following composition:

| Ingredients | Percent by weight |
|---|---|
| Water | 31.70 |
| Sour cream | 23.40 |
| WPC*/Corn oil** | 13.10 |
| Cream (30% butterfat) | 7.80 |
| Blue Cheese | 18.00 |
| Seasoning blend | 1.35 |
| Starch | 1.40 |
| Salt | 1.00 |
| Vinegar (200 grain) | 2.20 |
| Guar/locus bean gum | 0.05 |
| Total: | 100.00 |

\* WPC having approximately 30% functional whey protein fraction.
\*\* Functional whey protein fraction in base=4.14%.

The food product base of the Blue Cheese dressing was prepared substantially as described in Example I. A seasoning blend, starch, salt and gum were added subsequently. After the swept-surface heat exchanger, blue cheese was added to the dressing to give the dressing a blue cheese flavor. The result was a Blue Cheese salad dressing having a similar taste and mouth feel to a high fat Blue Cheese salad dressing.

Although a specific composition of a Blue Cheese salad dressing is described in Example V, it is believed that the following ingredient ranges in weight percent will produce a very satisfactory salad dressing using the process of the present invention.

Water: 27.0—41.0
Sour cream: 10.0—30.0
WPC/Corn oil (whey protein fraction=30%): 11.0—17.0
Cream (30% butterfat): 0.0—10.0
Blue Cheese: 6.0—20.0
Seasoning blend: 0.5—3.0
Starch: 0.0—3.0
Salt: 0.25—3.0
Vinegar (200 grain): 0.5—4.0
Guar/locus bean gum: 0.0—0.3.

7

Example VI
A Thousand Island salad dressing was prepared having the following composition:

| Ingredients | Percent by weight |
|---|---|
| Water | 31.60 |
| Sour cream | 21.50 |
| WPC*/Corn oil** | 12.00 |
| Cream (30% butterfat) | 7.20 |
| Relish | 8.00 |
| Ketchup | 8.00 |
| Seasoning blend | 6.40 |
| Sugar | 2.70 |
| Salt | 1.00 |
| Starch | 0.80 |
| Mustard flour | 0.50 |
| Lactic acid (88% by weight) | 0.25 |
| Guar/locus bean gum | 0.05 |
| Total: | 100.00 |

\* WPC having approximately 30% functional whey protein fraction.
\*\* Functional whey protein fraction in base=3.98%.

The food product base of the Thousand Island dressing was prepared substantially as described in Example I except that lactic acid instead of vinegar was added to the mixture in the high speed blender. Relish and ketchup, seasoning blend, sugar, salt, mustard flour, starch and gum were added before the swept-surface heat exchanger to the food product base. The result was a Thousand Island salad dressing having a similar taste and mouth feel to a high fat Thousand Island salad dressing.

Although a specific composition of a Thousand Island salad dressing is described in Example VI, it is believed that the following ingredient ranges in weight percent will produce a very satisfactory salad dressing using the process of the present invention.

Water: 25.0—40.0
Sour cream: 10.0—30.0
WPC/Corn oil (whey protein fraction=30%): 9.0—15.0
Cream (30% butterfat): 0.0—10.0
Relish: 2.0—12.0
Ketchup: 0.0—15.0
Seasoning blend: 1.0—8.0
Sugar: 0.5—5.0
Salt: 0.5—3.0
Starch: 0.0—3.0
Mustard flour: 0.05—1.5
Lactic acid (88% by weight): 0.1—1.0
Guar/locus bean gum: 0.0—0.3.

Example VII

A Parmesan salad dressing was prepared having the following composition:

| Ingredients | Percent by weight |
|---|---|
| Water | 38.19 |
| Sour cream | 26.00 |
| WPC*/Corn oil** | 12.60 |
| Cream (30% butterfat) | 8.70 |
| Parmesan Cheese | 9.00 |
| Vinegar (200 grain) | 1.79 |
| Starch | 1.10 |
| Lactic acid (88% by weight) | 0.52 |
| Seasoning blend | 2.06 |
| Guar/locus bean gum | 0.04 |
| Total: | 100.00 |

 * WPC having approximately 30% functional whey protein fraction.
** Functional whey protein fraction in base=3.54%.

The food product base of the Parmesan salad dressing was prepared substantially as described in Example I except that lactic acid was substituted for vinegar in the high speed blender. A seasoning blend, starch and gum were added subsequently. Parmesan cheese was also added to impart a parmesan cheese flavor to the food product base before the swept-surface heat exchanger. The result was a Parmesan salad dressing having a similar taste and mouth feel to a high fat Parmesan salad dressing.

Although a specific composition of a Parmesan salad dressing is described in Example VII, it is believed that the following ingredient ranges in weight percent will produce a very satisfactory salad dressing using the process of the present invention.

Water: 35.0—50.0
Sour cream: 10.0—30.0
WPC/Corn oil (whey protein fraction=30%): 11.0—17.0
Cream (30% butterfat): 0.0—10.0
Parmesan Cheese: 0.0—12.0
Vinegar (200 grain): 0.5—3.0
Starch: 0.0—3.0
Lactic acid (88% by weight): 0.1—1.5
Seasoning blend: 0.5—4.0
Guar/locust bean gum: 0.0—0.3.

Example VIII

The food product base was also used as a base for a sour cream product. The sour cream product had a taste and mouth feel of a full fat sour cream. The sour cream product had the following composition:

| Ingredients | Percent by weight |
|---|---|
| Water | 50.60 |
| Sour cream | 32.90 |
| WPC*/Corn oil** | 12.85 |
| Starch | 1.58 |
| Nonfat milk solids | 0.99 |
| Lactic acid | 0.99 |
| Sour cream flavoring | 0.09 |
| Total: | 100.00 |

 * WPC having approximately 30% functional whey protein fraction.
** Functional whey protein fraction in base=3.20%.

The food product base was prepared by mixing 104 pounds of whey protein concentrate having a functional whey protein fraction of 30% with 26 pounds of corn oil in a ribbon blender. 333 pounds of sour

9

cream and 512 lbs of water were added to the WPC/oil mixture in a high speed blender to form a food product base having the following composition:

| Ingredients | Percent by weight |
|---|---|
| Water | 52.51 |
| Sour cream | 34.15 |
| WPC*/Corn oil** | 13.34 |
| Total: | 100.00 |

* WPC having approximately 30% functional whey protein fraction.
** Functional whey protein fraction in base=3.20%.

In addition, to the sour cream and water, 10 pounds of lactic acid, 16 pounds of starch and 10 pounds of nonfat milk solids and 0.9 pounds of a sour cream flavor were also added in the high speed blender.

After the high speed blender, the mixture was processed through a colloid mill to remove any lumps that had been formed in the previous mixing steps. The mixture was then processed through a single-stage homogenizer to form an opaque emulsion and the emulsion was then processed through a Cherry-Burrell swept-surface heat exchanger at approximately 180°F to achieve a viscosity of approximately 600,000 centipoise.

The resulting sour cream product was indistinguishable in taste and mouth feel and performance from an actual sour cream.

Although a specific composition of a sour cream product is described in Example VIII, it is believed that the following ingredient ranges in weight percent will produce a very satisfactory sour cream product using the process of the present invention.

Water: 37.0—69.0
Sour cream: 10.0—50.0
WPC/Corn oil (whey protein fraction=30%): 9.3—17.4
Starch: 1.0—3.0
Nonfat milk solids: 0.0—4.0
Lactic acid: 0.25—1.5
Sour cream flavoring: 0.02—0.15
Agar: 0.0—0.3.

Although the present invention has been described with reference to preferred embodiments, workers skilled in the art will recognize that changes may be made in form and detail without departing from the scope of the invention.

The S.I. equivalents of units used herein are as follows:

| °F | °C | Centipoises (cp) | Newtons second/metre$^2$ | Pounds | Kg |
|---|---|---|---|---|---|
| 140 | 60 | 88,000 | 88. | 0.9 | 0.41 |
| 150 | 65.5 | 150,000 | 150 | 10 | 4.54 |
| 170 | 77 | 600,000 | 600 | 16 | 7.26 |
| 180 | 82 | 2,800,000 | 2,800 | 26 | 11.80 |
| 212 | 100 | | | 104 | 47.22 |
| | | | | 333 | 151.18 |
| | | | | 512 | 232.45 |

**Claims**

1. A process for preparing a food product base comprising:
mixing a whey protein concentrate having a whey protein fraction obtained by a separation process using a temperature less than the temperature that causes denaturization of whey protein, the whey protein fraction being in a range of 3.0 to 7.5% by weight of the food product base with a composition comprising water or water-based compositions to form a mixture; and
heating the mixture until a gel forms having a non-grainy texture.

2. The process of claim 1 wherein the whey protein concentrate has a functional protein content of approximately 30% by weight.

3. The process of claim 1 wherein the whey protein concentrate is first dry blended with a vegetable oil and then mixed with the water or water based composition.

10

# 0 129 346

4. The process of claim 1 wherein the mixture is heated forming a gel having a viscosity of at least approximately 88,000 centipoise.

5. The process of claim 1 wherein the water-based composition is sour cream.

6. The process of claim 5 wherein the water-based composition is cream.

7. The process of claim 1 wherein the mixture is heated to a temperature range of approximately 170°F to 212°F and being in contact with a heating surface for less than one second.

8. The process of claim 1 wherein a food grade acid is added to the food product base to lower the pH below approximately 4.6.

9. The process of claim 1 wherein the water-based composition is a milk-derived composition.

10. The process of claim 1 wherein the heating is effected in a swept-surface heating device.

11. The process of claim 1 wherein the functional whey protein fraction is in the approximate range of 3.0 to 4.5% by weight of the food product base.

·12. A Bacon and Cheese salad dressing comprising the food product base produced by the process of claim 1 and Bacon and Cheese flavor ingredients.

13. A French salad dressing comprising the food product base produced by the process of claim 1 and French flavor ingredients.

14. A Creamy Italian salad dressing comprising the food product base produced by the process of claim 1 and Creamy Italian flavor ingredients.

15. A Ranch salad dressing comprising the food product base produced by the process of claim 1 and Ranch flavor ingredients.

16. A Blue Cheese salad dressing comprising the food product base produced by the process of claim 1 and Blue Cheese flavor ingredients.

17. A Thousand Island salad dressing comprising the food product base produced by the process of claim 1 and Thousand Island flavor ingredients.

18. A Parmesan salad dressing comprising the food product base produced by the process of claim 1 and Parmesan flavor ingredients.

19. A sour cream-type food product comprising the food product base produced by the process of claim 1 and starch, lactic acid and sour cream flavoring.

20. A food product comprising a food product base having a gelled whey protein fraction obtained by a separation process using a temperature less than the temperature that causes denaturization of whey protein, the whey protein fraction being in a range of approximately 3.0 to 7.5% by weight of the food product base, the gelled protein fraction having been reacted with water and being characterized by a fatty mouth feel and a smooth viscous non-grainy texture.

21. The food product of claim 20 wherein the whey protein fraction is part of a whey protein concentrate.

22. The food product of claim 20 and further including sour cream and dairy cream.

23. The food product of claim 22 wherein the food product is a cheese and bacon salad dressing having the following composition in approximate weight percent:
Water: 31.0—45.0
Sour cream: 10.0—30.0
WPC/Corn oil (whey protein fraction=30%): 12.0—19.0
Cream (30% butterfat): 0.0—10.0
Sugar: 3.0—9.0
Cheese: 1.0—10.0
Seasoning blend: 1.5—7.0
Vinegar (200 grain): 1.0—5.0
Bacon bits: 0.5—4.0
Salt: 0.5—3.0
Starch: 0.0—3.0
Guar/locus bean gum: 0.0—0.3.

24. The food product of claim 22 wherein the food product is a French salad dressing having the following composition in approximate weight percent:
Water: 25.0—40.0
Sour cream: 10.0—30.0
Ketchup: 0.0—20.0
WPC/Corn oil (whey protein fraction=30%): 9.0—15.0
Cream (30% butterfat): 0.0—10.0
Sugar: 1.0—10.0
Seasoning blend: 0.5—4.0
Vinegar (200 grain): 1.0—5.0
Starch: 0.0—3.0
Oleoresin Paprika: 0.0—0.3
Guar/locus bean gum: 0.0—0.3
Onion powder: 0.0—1.0.

11

25. The food product of claim 22 wherein the food product is a Creamy Italian salad dressing having the following composition in approximate weight percent:

Water: 40.0—56.0
Sour cream: 10.0—30.0
WPC/Corn oil (whey protein fraction=30%): 13.0—18.0
Cream (30% butterfat): 0.0—10.0
Seasoning blend: 1.0—6.0
Starch: 0.0—3.0
Salt: 0.5—3.0
Onion oil: 0.001—0.05
Garlic oil: 0.001—0.1
Lactic acid (88% by weight): 0.1—2.0
Citric acid: 0.01—1.0
Guar/locus bean gum: 0.0—0.3.

26. The food product of claim 22 wherein the food product is a Ranch salad dressing having the following composition in approximate weight percent:

Water: 40.0—56.0
Sour cream: 10.0—30.0
WPC/Corn oil (whey protein fraction=30%): 13.0—18.0
Cream (30% butterfat): 0.0—10.0
Seasoning blend: 0.5—6.0
Starch: 0.0—3.0
Lactic acid (88% by weight): 0.5—4.0
Garlic oil: 0.05—1.0
Guar/locus bean gum: 0.0—0.3.

27. The food product of claim 22 wherein the food product is a Blue Cheese salad dressing having the following composition in approximate weight percent:

Water: 27.0—41.0
Sour cream: 10.0—30.0
WPC/Corn oil (whey protein fraction=30%): 11.0—17.0
Cream (30% butterfat): 0.0—10.0
Blue Cheese: 6.0—20.0
Seasoning blend: 0.5—3.0
Starch: 0.0—3.0
Salt: 0.25—3.0
Vinegar (200 grain): 0.5—4.0
Guar/locust bean gum: 0.0—0.3.

28. The food product of claim 22 wherein the food product is a Thousand Island salad dressing having the following composition in approximate weight percent:

Water: 25.0—40.0
Sour cream: 10.0—30.0
WPC/Corn oil (whey protein fraction=30%): 9.0—15.0
Cream (30% butterfat): 0.0—10.0
Relish: 2.0—12.0
Ketchup: 0.0—15.0
Seasoning blend: 1.0—8.0
Sugar: 0.5—5.0
Salt: 0.5—3.0
Starch: 0.0—3.0
Mustard flour: 0.05—1.5
Lactic acid (88% by weight): 0.1—1.0
Guar/locust bean gum: 0.0—0.3.

29. The food product of claim 22 wherein the food product is a Parmesan salad dressing having the following composition in approximate weight percent:

Water: 35.0—50.0
Sour cream: 10.0—30.0
WPC/Corn oil (whey protein fraction=30%): 11.0—17.0
Cream (30% butterfat): 0.0—10.0
Parmesan Cheese: 0.0—12.0
Vinegar (200 grain): 0.5—3.0
Starch: 0.0—3.0
Lactic acid (88% by weight): 0.1—1.5
Seasoning blend: 0.5—4.0
Guar/locust bean gum: 0.0—0.3.

30. The food product of claim 22 wherein a food grade acid is added in sufficient quantity to lower the pH of the food product below approximately 4.6.

31. The food product of claim 20 wherein the food product is a Sour Cream type product having the following composition in approximate weight percent:

Water: 37.0—69.0

Sour cream: 10.0—50.0

WPC/Corn oil (whey protein fraction=30%): 9.3—17.4

Starch: 1.0—3.0

Nonfat milk solids: 0.0—4.0

Lactic acid: 0.25—1.5

Sour cream flavoring: 0.02—0.15

Agar: 0.0—0.3.

32. A process for preparing a food product base comprising:

mixing a whey protein concentrate having a functional whey protein fraction with a composition comprising water or water-based compositions to form a mixture, the functional whey protein fraction being in an amount to effect a viscosity of at least approximately 88,000 centipoise upon reaction of the functional whey protein with the water, the functional whey protein being obtained by a process using a temperature less than the temperature that causes denaturization of the whey protein; and

heating the mixture to a temperature that reacts the protein with the water.

33. The process of claim 32 wherein the mixture is heated to a temperature range of approximately 170°F to 212°F and being in contact with a heating surface for less than one second.

**Patentansprüche**

1. Verfahren zur Herstellung einer Grundlage für ein Lebensmittel gekennzeichnet durch

Mischen eines Molkeproteinkonzentrates, das eine Molkeproteinfraktion aufweist, die durch einen Trennungsprozeß erhalten ist, bei dem die Reaktionstemperatur geringer ist als die Temperatur, die die Denaturierung des Molkeproteins verursacht, wobei die Molkeproteinfraktion einen Anteil von 3,0 bis 7,5 Gew.-% der Lebensmittelgrundlage ausmacht, mit einer Wasser oder auf Wasser basierende Verbindungen enthaltende Verbindung zur Ausbildung eines Gemisches; und

Erwärmen des Gemisches bis zur Bildung eines Gels mit einem nichtkörnigen Gefüge.

2. Verfahren nach Anspruch 1, dadurch gekennzeichnet, daß das Molkeproteinkonzentrat einen funktionellen Proteingehalt von annähernd 30 Gew.-% aufweist.

3. Verfahren nach Anspruch 1, dadurch gekennzeichnet, daß das Molkeproteinkonzentrat zuerst trocken mit einem Pflanzenöl vermischt und anschließend mit dem Wasser oder der auf Wasser basierenden Verbindung gemischt wird.

4. Verfahren nach Anspruch 1, dadurch gekennzeichnet; daß das Gemisch zur Bildung eines Gels mit einer Viskosität von wenigstens etwa 88.000 cp erhitzt wird.

5. Verfahren nach Anspruch 1, dadurch gekennzeichnet, daß die auf Wasser basierende Verbindung Sauerrahm ist.

6. Verfahren nach Anspruch 1, dadurch gekennzeichnet, daß die auf Wasser basierende Verbindung Rahm ist.

7. Verfahren nach Anspruch 1, dadurch gekennzeichnet, daß das Gemisch bis auf einen Temperaturbereich von etwa 77°C bis 100°C erhitzt wird und mit einer Heizfläche für weniger als eine Sekunde in Kontakt steht.

8. Verfahren nach Anspruch 1, dadurch gekennzeichnet, daß zum Senken des pH-Wertes auf unter etwa 4,6 ein saures Lebensmittel zu der Lebensmittelgrundlage zugegeben wird.

9. Verfahren nach Anspruch 1, dadurch gekennzeichnet, daß die auf Wasser basierende Verbindung eine aus Milch gewonnene Verbindung ist.

10. Verfahren nach Anspruch 1, dadurch gekennzeichnet, daß das Erhitzen mittels einer Flächenheizvorrichtung durchgeführt wird.

11. Verfahren nach Anspruch 1, dadurch gekennzeichnet, daß die funktionelle Molkeproteinfraktion etwa 3,0 bis 4,5 Gewichtsprozent der Lebensmittelgrundlage ausmacht.

12. Schinken- und Käsesalatsosse, die die nach Anspruch 1 hergestellte Lebensmittelgrundlage sowie Schinken- und Käsegeschmacksstoffe enthält.

13. "French-dressing" für Salate, die die nach Anspruch 1 hergestellte Lebensmittelgrundlage sowie "French"-geschmacksstoffe enthält.

14. Cremige "Italian-dressing" für Salate, die die nach Anspruch 1 hergestellte Lebensmittelgrundlage sowie cremige "Italian"-geschmacksstoffe enthält.

15. "Ranch-dressing" für Salate, die die nach Anspruch 1 hergestellte Lebensmittelgrundlage sowie "Ranch"-geschmacksstoffe enthält.

16. Blauschimmelkäse-Salatsosse, die die nach Anspruch 1 hergestellte Lebensmittelgrundlage sowie Blauschimmelgeschmacksstoffe enthält.

17. "Thousand-Island"-Salatsosse, die die nach Anspruch 1 hergestellte Lebensmittelgrundlage sowie "Thousand-Island"-geschmacksstoffe enthält.

**0 129 346**

18. Parmesan-Salatsosse, die die nach Anspruch 1 hergestellte Lebensmittelgrundlage sowie Parmesan-geschmacksstoffe enthält.

19. Sauerrahmartiges Lebensmittel, das die nach Anspruch 1 hergestellte Lebensmittelgrundlage sowie Stärke, Milchsäure und Sauerrahmaroma enthält.

20. Lebensmittel enthaltend eine Lebensmittelgrundlage mit einer gelierten Molkeproteinfraktion erhalten durch einen Trennprozeß, bei dem die Reaktionstemperatur geringer ist als die Temperatur, die die Denaturierung des Molkeproteins verursacht, wobei die Molkeproteinfraktion einen ungefähren Anteil von 3,0 bis 7,5 Gew.-% der Lebensmittelgrundlage ausmacht und die gelierte Proteinfraktion mit Wasser zur Reaktion gebracht ist, gekennzeichnet durch einen "fettigen Geschmack im Mund" und ein glattes, zähflüssiges, nichtkörniges Gefüge.

21. Lebensmittel nach Anspruch 20, dadurch gekennzeichnet, daß die Molkeproteinfraktion Teil eines Molkeproteinkonzentrates ist.

22. Lebensmittel nach Anspruch 20, dadurch gekennzeichnet, daß es darüberhinaus Sauerrahm und Milchrahm enthält.

23. Lebensmittel nach Anspruch 22, dadurch gekennzeichnet, daß das Lebensmittel eine Käse- und Schinkensalatsosse ist, die folgende Zusammensetzung (in Gewichtsprozent) aufweist:

| | |
|---|---|
| Wasser | 31,0—45,0 |
| Sauerrahm | 10,0—30,0 |
| MPK/Maiskeimöl (Molkeprotein-fraktion=30%) | 12,0—19,0 |
| Rahm (30% Butterfett) | 0,0—10,0 |
| Zucker | 3,0—9,0 |
| Käse | 1,0—10,0 |
| Würzmischung | 1,5—7,0 |
| Essig (200 grain) | 1,0—5,0 |
| Schinkenstückchen | 0,5—4,0 |
| Salz | 0,5—3,0 |
| Stärke | 0,0—3,0 |
| Guar/Johannisbrotgummi | 0,0—0,3 |

24. Lebensmittel nach Anspruch 22, dadurch gekennzeichnet, daß das Lebensmittel eine "French-dressing" für Salate ist, die folgende Zusammensetzung (in Gewichtsprozent) aufweist:

| | |
|---|---|
| Wasser | 25,0—40,0 |
| Sauerrahm | 10,0—30,0 |
| Ketchup | 0,0—20,0 |
| MPK/Maiskeimöl (Molkeprotein-fraktion=30%) | 9,0—15,0 |
| Rahm (30% Butterfett) | 0,0—10,0 |
| Zucker | 1,0—10,0 |
| Würzmischung | 0,5—4,0 |
| Essig (200 grain) | 1,0—5,0 |
| Stärke | 0,0—3,0 |
| Oleoresin Paprika | 0,0—0,3 |
| Guar/Johannisbrotgummi | 0,0—0,3 |
| Zwiebelpulver | 0,0—1,0 |

25. Lebensmittel nach Anspruch 22, dadurch gekennzeichnet, daß das Lebensmittel eine cremige "Italian-dressing" für Salate ist, die folgende Zusammensetzung (in Gewichtsprozent) aufweist:

| | |
|---|---|
| Wasser | 40,0—56,0 |
| Sauerrahm | 10,0—30,0 |
| MPK/Maiskeimöl (Molkeprotein-fraktion=30%) | 13,0—18,0 |
| Rahm (30% Butterfett) | 0,0—10,0 |
| Würzmischung | 1,0—6,0 |
| Stärke | 0,0—3,0 |
| Salz | 0,5—3,0 |
| Zwiebelöl | 0,001—0,05 |
| Knoblauöl | 0,001—0,1 |
| Milchsäure (88 Gew.-%) | 0,1—2,0 |
| Zitronensäure | 0,01—1,0 |
| Guar/Johannisbrotgummi | 0,0—0,3 |

14

# 0 129 346

26. Lebensmittel nach Anspruch 22, dadurch gekennzeichnet, daß das Lebensmittel eine "Ranch-dressing" für Salate ist, die folgende Zusammensetzung (in Gewichtsprozent) aufweist:

| | |
|---|---|
| Wasser | 40,0—56,0 |
| Sauerrahm | 10,0—30,0 |
| MPK/Maiskeimöl (Molkeprotein-fraktion=30%) | 13,0—18,0 |
| Rahm (30% Butterfett) | 0,0—10,0 |
| Würzmischung | 0,5—6,0 |
| Stärke | 0,0—3,0 |
| Milchsäure (88 Gew.-%) | 0,5—4,0 |
| Knoblauchöl | 0,05—1,0 |
| Guar/Johannisbrotgummi | 0,0—0,3 |

27. Lebensmittel nach Anspruch 22, dadurch gekennzeichnet, daß das Lebensmittel eine Blauschimmelkäse-Salatsosse ist, die folgende Zusammensetzung (in Gewichtsprozent) aufweist:

| | |
|---|---|
| Wasser | 27,0—41,0 |
| Sauerrahm | 10,0—30,0 |
| MPK/Maiskeimöl (Molkeprotein-fraktion=30%) | 11,0—17,0 |
| Rahm (30% Butterfett) | 0,0—10,0 |
| Blauschimmelkäse | 6,0—20,0 |
| Würzmischung | 0,5—3,0 |
| Stärke | 0,0—3,0 |
| Salz | 0,25—3,0 |
| Essig (200 grain) | 0,5—4,0 |
| Guar/Johannisbrotgummi | 0,0—0,3 |

28. Lebensmittel nach Anspruch 22, dadurch gekennzeichnet, daß das Lebensmittel eine "Thousand-Island"-Salatsosse ist, die folgende Zusammensetzung (in Gewichtsprozent) aufweist:

| | |
|---|---|
| Wasser | 25,0—40,0 |
| Sauerrahm | 10,0—30,0 |
| MPK/Maiskeimöl (Molkeprotein-fraktion=30%) | 9,0—15,0 |
| Rahm (30% Butterfett) | 0,0—10,0 |
| Gewürz | 2,0—12,0 |
| Ketchup | 0,0—15,0 |
| Würzmischung | 1,0—8,0 |
| Zucker | 0,5—5,0 |
| Salz | 0,5—3,0 |
| Stärke | 0,0—3,0 |
| Senfmehl | 0,05—1,5 |
| Milchsäure (88 Gew.-%) | 0,1—1,0 |
| Guar/Johannisbrotgummi | 0,0—0,3 |

29. Lebensmittel nach Anspruch 22, dadurch gekennzeichnet, daß das Lebensmittel eine Parmesan-Salatsosse ist, die folgende Zusammensetzung (in Gewichtsprozent) aufweist:

| | |
|---|---|
| Wasser | 35,0—50,0 |
| Sauerrahm | 10,0—30,0 |
| MPK/Maiskeimöl (Molkeprotein-fraktion=30%) | 11,0—17,0 |
| Rahm (30% Butterfett) | 0,0—10,0 |
| Parmesankäse | 0,0—12,0 |
| Essig (200 grain) | 0,5—3,0 |
| Stärke | 0,0—3,0 |
| Milchsäure (88 Gew.-%) | 0,1—1,5 |
| Würzmischung | 0,5—4,0 |
| Guar/Johannisbrotgummi | 0,0—0,3 |

30. Lebensmittel nach Anspruch 22, dadurch gekennzeichnet, daß zum Senken des pH-Wertes auf unter etwa 4,6 ein saures Lebensmittel in ausreichender Menge zugegeben wird.

15

31. Lebensmittel nach Anspruch 20, dadurch gekennzeichnet, daß das Lebensmittel ein sauerrahmartiges Produkt ist, das folgende Zusammensetzung (in Gewichtsprozent) aufweist:

| | |
|---|---|
| Wasser | 37,0—69,0 |
| Sauerrahm | 10,0—50,0 |
| MPK/Maiskeimöl (Molkeprotein- | |
| fraktion=30%) | 9,3—17,4 |
| Stärke | 1,0—3,0 |
| Magermilchpulver | 0,0—4,0 |
| Milchsäure | 0,25—1,5 |
| Sauerrahmaroma | 0,02—0,15 |
| Agar-Agar | 0,0—0,3 |

32. Verfahren zur Herstellung einer Grundlage für ein Lebensmittel gekennzeichnet durch
Mischen eines Molkeproteinkonzentrates, das eine funktionelle Molkeproteinfraktion aufweist mit einer Wasser oder auf Wasser basierende Verbindungen enthaltende Verbindung zur Ausbildung eines Gemisches, wobei die funktionelle Molkeproteinfraktion in einem Anteil vorhanden ist zur Bildung einer Viskosität von wenigstens 88.000 cp, wenn die Reaktion des funktionellen Molkeproteins mit dem Wasser beendet ist, wobei das funktionelle Molkeprotein durch einen Prozeß erhalten ist, bei dem die Reaktionstemperatur geringer ist als die Temperatur, die die Denaturierung des Molkeproteins verursacht und wobei das Gemisch soweit erhitzt wird, daß das Protein mit dem Wasser reagiert.

33. Verfahren nach Anspruch 32, dadurch gekennzeichnet, daß das Gemisch bis auf einen Temperaturbreich von etwa 77°C bis 100°C erhitzt wird und mit einer Heizfläche für weniger als eine Sekunde in Kontakt steht.

## Revendications

1. Procédé pour préparer une matière première, ou base, pour produit alimentaire, comprenant le mélangeage d'un concentré de protéines de petit-lait, ayant une fraction de protéines de petit-lait que l'on obtient par un processus de séparation en utilisant une température inférieure à la température provoquant la dénaturation de la protéine de petit-lait, la proportion de la fraction des protéines de petit-lait se situant dans un intervalle allant de 3,0 à 7,5% du poids de la base pour produit alimentaire, avec une composition comprenant de l'eau ou des compositions à base d'eau, pour former un mélange; et le chauffage du mélange jusqu'à formation d'un gel ayant une texture non grenue.

2. Procédé selon la revendication 1, dans lequel le concentré des protéines du petit-lait présente une teneur en des protéines fonctionnelles d'environ 30% en poids.

3. Procédé selon la revendication 1, dans lequel on mélange tout d'abord à sec le concentré des protéines de petit-lait avec une huile végétale puis on mélange avec l'eau ou avec la composition à base aqueuse.

4. Procédé selon la revendication 1, dans lequel on chauffe le mélange en formant un gel ayant une viscosité d'au moins 88 000 centipoises environ (88 Pa/s).

5. Procédé selon la revendication 1, dans lequel la composition à base d'eau est de la crème acide.

6. Procédé selon la revendication 5, dans lequel la composition à base d'eau est de la crème.

7. Procédé selon la revendication 1, dans lequel on chauffe le mélange jusqu'à un intervalle de température allant d'environ 77°C (170°F) à 100°C (212°F), ce mélange étant en contact pendant moins d'une seconde avec une surface de chauffage.

8. Procédé selon la revendication 1, dans lequel on ajoute à la base pour produit alimentaire un acide de qualité alimentaire pour en abaisser le pH au-dessous d'environ 4,6.

9. Procédé selon la revendication 1, dans lequel la composition à base d'eau est une composition dérivant du lait.

10. Procédé selon la revendication 1, dans lequel on effectue le chauffage dans un dispositif de chauffage à balayage de surface.

11. Procédé selon la revendication 1, dans lequel la proportion de la fraction des protéines fonctionnelles du petit-lait se situe dans l'intervalle approximatif de 3,0 à 4,5% du poids de la base pour produit alimentaire.

12. Assaisonnement au lard ("bacon") et au fromage pour salades, comprenant la base pour produit alimentaire obtenue par le procédé de la revendication 1 et des ingrédients donnant la flaveur de "bacon" et de fromage.

13. Assaisonnement "français" pour salades, comprenant la base pour produit alimentaire obtenue par le procédé selon la revendication 1 et des ingrédients donnant la flaveur d'un assaisonnement "français".

14. Assaisonnement "italien" crémeux pour salades, comprenant la base pour produit alimentaire obtenue selon le procédé de la revendication 1 et des ingrédients donnant la flaveur d'un produit crémeux "italien".

15. Assaisonnement de type "Ranch" pour salades, comprenant la base pour produit alimentaire obtenue par le procédé selon la revendication 1 et des ingrédients donnant la flaveur de type "Ranch".

**0 129 346**

16. Assaisonnement au fromage bleu pour salades, comprenant la base pour produit alimentaire obtenue par le procédé selon la revendication 1 et des ingrédients donnant la flaveur du bleu.

17. Assaisonnement de type "Mille Iles" pour salades, comprenant la base pour produit alimentaire obtenue par le procédé selon la revendication 1 et des ingrédients donnant la flaveur de l'assaisonnement des "Mille Iles" ("Thousand Islands").

18. Assaisonnement au parmesan pour salades, comprenant la base pour produit alimentaire obtenue par le procédé selon la revendication 1 et des ingrédients donnant la flaveur du parmesan.

19. Produit alimentaire de type crème acide, comprenant la base pour produit alimentaire obtenue par le procédé selon la revendication 1 et de l'amidon, de l'acide lactique et de l'arôme de crème acide.

20. Produit alimentaire comprenant une base pour produit alimentaire ayant une fraction gélifiée de protéines de petit-lait que l'on obtient par un procédé de séparation en utilisant une température inférieure à la température provoquant une dénaturation des protéines de petit-lait, la proportion de la fraction des protéines de petit-lait se situant dans l'intervalle allant d'environ 3,0 à 7,5% du poids de la base pour produit alimentaire, la fraction des protéines gélifiées ayant été mise en réaction avec de l'eau et se caractérisant par une sensation grasse dans la bouche et une texture lisse, visqueuse et non grenue.

21. Produit alimentaire selon la revendication 20, dans lequel la fraction des protéines de petit-lait fait partie d'un concentré de protéines de petit-lait.

22. Produit alimentaire selon la revendication 1, comprenant en outre de la crème acide et de la crème de laiterie.

23. Produit alimentaire selon la revendication 22, dans lequel le produit alimentaire est un assaisonnement au fromage et au lard ("bacon") pour salades, ayant la composition suivante, en pourcentage pondéral approximatif:
Eau: 31,0—45,0
Crème acide: 10,0—30,0
CPPL (concentré de protéine de petit-lait)/huile de maïs (fraction des protéines du petit-lait=30%): 12,0—19,0
Crème (30% de matière grasse): 0,0—10,0
Sucre: 3,0—9,0
Fromage: 1,0—10,0
Mélange d'épices pour assaisonnement: 1,5—7,0
Vinaigre (200 grains, soit 12,96 g d'acide acétique/100 ml): 1,0—5,0
Morceaux de lard ("bacon"): 0,5—4,0
Sel: 0,5—3,0
Amidon: 0,0—3,0
Gomme guar/de Caroube: 0,0—0,3.

24. Produit alimentaire selon la revendication 22, dans lequel le produit alimentaire est un assaisonnement "français" ("French dressing") pour salades ayant la composition suivante, en pourcentage pondéral approximatif:
Eau: 25,0—40,0
Crème acide: 10,0—30,0
Sauce tomate ("Ketchup"): 0,0—20,0
CPPL/huile de maïs (fraction des protéines du petit-lait=30%): 9,0—15,0
Crème (30% de matière grasse): 0,0—10,0
Sucre: 1,0—10,0
Mélange d'épices d'assaisonnement: 0,5—4,0
Vinaigre (200 grains): 1,0—5,0
Amidon: 0,0—3,0
Paprika: 0,0—0,3
Gomme Guar/de Caroube: 0,0—0,3
Poudre d'oignon: 0,0—1,0.

25. Produit alimentaire selon la revendication 22, dans lequel le produit alimentaire est un assaisonnement "italien" crémeux pour salades, ayant le composition suivante en pourcentage pondéral approximatif:
Eau: 40,0—56,0
Crème acide: 10,0—30,0
CPPL/huile de maïs (fraction des protéines de petit-lait=30%): 13,0—18,0
Crème (30% de matière grasse): 0,0—10,0
Mélange d'épices d'assaisonnement: 1,0—6,0
Amidon: 0,0—3,0
Sel: 0,5—3,0
Essence d'oignon: 0,001—0,05
Essence d'ail: 0,001—0,1
Acide lactique (88% en poids): 0,1—2,0
Acide citrique: 0,01—1,0
Gomme guar/de Caroube: 0,0—0,3.

17

**0 129 346**

26. Produit alimentaire selon la revendication 22, dans lequel le produit alimentaire est un assaisonnement de type "Ranch" pour salades, ayant la composition suivante en pourcentage pondéral approximatif:

Eau: 40,0—56,0
Crème acide: 10,0—30,0
CPPL/huile de maîs (fraction de protéines de petit-lait=30%): 13,0—18,0
Crème (30% de matière grasse): 0,0—10,0
Mélange d'épices pour assaisonnement: 0,5—6,0
Amidon: 0,0—3,0
Acide lactique (88% en poids): 0,5—4,0
Essence d'ail: 0,05—1,0
Gomme Guar/de Caroube: 0,0—0,3.

27. Produit alimentaire selon la revendication 22, dans lequel le produit alimentaire est un assaisonnement au fromage bleu pour salade, ayant la composition suivante en pourcentage pondéral approximatif:

. Eau: 27,0—41,0
Crème acide: 10,0—30,0
CPPL/huile de maîs (fraction de protéines du petit-lait=30%): 11,0—17,0
Crème (30% de matière grasse): 0,0—10,0
Fromage bleu: 6,0—20,0
Mélange d'épices d'assaisonnement: 0,5—3,0
Amidon: 0,0—3,0
Sel: 0,25—3,0
Vinaigre (200 grains): 0,5—4,0
Gomme Guar/de Caroube: 0,0—0,3.

28. Produit alimentaire selon la revendication 22, dans lequel le produit alimentaire est un assaisonnement dit des "Mille Iles" ("Thousand Islands") pour salades, ayant le composition suivante en pourcentage pondéral approximatif:

Eau: 25,0—40,0
Crème acide: 10,0—30,0
CPPL/huile de maîs (fraction des protéines du petit-lait=30%): 9,0—15,0
Crème: (30% de matière grasse): 0,0—10,0
Condiments: 2,0—12,0
Sauce à la tomate ("Ketchup"): 0,0—15,0
Mélange d'épices d'assaisonnement: 1,0—8,0
Sucre: 0,5—5,0
Sel: 0,5—3,0
Amidon: 0,0—3,0
Farine de moutarde: 0,05—1,5
Acide lactique (à 88% en poids): 0,1—1,0
Gomme Guar/de Caroube: 0,0—0,3.

29. Produit alimentaire selon la revendication 22, dans lequel le produit alimentaire est un assaisonnement au parmesan pour salades, ayant la composition suivante en pourcentage pondéral approximatif:

Eau: 35,0—50,0
Crème acide: 10,0—30,0
CPPL/huile de maîs (fraction des protéines du petit-lait=30%): 11,0—17,0
Crème (30% de matière grasse): 0,0—10,0
Fromage de parmesan: 0,0—12,0
Vinaigre (200 grains): 0,5—3,0
Amidon: 0,0—3,0
Acide lactique (88% en poids): 0,1—1,5
Mélange d'épices pour assaisonnement: 0,5—4,0
Gomme Guar/de Caroube: 0,0—0,3.

30. Produit alimentaire selon la revendication 22, dans lequel on ajoute un acide de qualité alimentaire en une quantité suffisante pour abaisser au-dessus d'environ 4,6, le pH du produit alimentaire.

31. Produit alimentaire selon la revendication 20, dans lequel le produit alimentaire est un produit de type crème acide ayant la composition suivante, en pourcentage pondéral approximatif:

Eau: 37,0—69,0
Crème acide: 10,0—50,0
CPPL/huile de maîs (fraction des protéines du petit-lait=30%): 9,3—17,4
Amidon: 1,0—3,0
Poudre de lait écrémé: 0,0—4,0
Acide lactique: 0,25—1,5

18

**0 129 346**

Arôme de crème acide: 0,02—0,15
Gélose: 0,0—0,3.

32. Procédé pour préparer une base pour produit alimentaire, comprenant:

le mélangeage d'un concentré de protéines de petit-lait, ayant une fraction de protéines fonctionelles de petit-lait, avec une composition comprenant de l'eau ou des compositions à base aqueuse pour former un mélange, la fraction des protéines fonctionnelles du petit-lait étant présente en une quantité permettant d'obtenir une viscosité d'au moins 88 000 centipoises environ (88 Pa/s) par réaction des protéines fonctionnelles du petit-lait avec l'eau, les protéines fonctionnelles de petit-lait étant obtenues par un procédé utilisant une température inférieure à la température provoquant une dénaturation des protéines de petit-lait; et

le chauffage du mélange jusqu'à une température provoquant la réaction des protéines avec l'eau.

33. Procédé selon la revendication 32, dans lequel on chauffe le mélange jusqu'à un intervalle de température allant d'environ 77°C à 100°C (170°F à 212°F), ce mélange étant en contact pendant moins d'une seconde avec une surface de chauffage.